# EUROPÄISCHE PATENTSCHRIFT

(11) **EP 2 660 118 B1**
(45) Veröffentlichungstag und Bekanntmachung des Hinweises auf die Patenterteilung: **04.12.2019**
(21) Anmeldenummer: 13178293.0
(22) Anmeldetag: 05.04.2011
(51) Int. Cl.: B60W 50/00, B60W 50/02, B60W 50/023

(54) **Vorrichtung zur Erkennung von ungewollten Triebstrangreaktionen eines Kraftfahrzeuges mit wenigstens einem Antriebsaggregat**
Device for detecting unwanted drive train reactions of a motor vehicle having at least one drive unit
Dispositif pour la détection des vibrations non désirées d'une chaîne cinématique d'un véhicule automobile comprenant au moins une unité d'entraînement

(30) Priorität: 04.06.2010 DE 102010029706
(43) Veröffentlichungstag der Anmeldung: 06.11.2013
(62) Teilanmeldung aus: 11712844.7
(73) Patentinhaber: ROBERT BOSCH GMBH, 70442 Stuttgart (DE)
(72) Erfinder: Falkenstein, Jens-Werner, 73434 Aalen (DE)

(56) Entgegenhaltungen:
- DE-A1- 10 242 123
- DE-A1- 10 260 838
- DE-A1-102005 055 173
- DE-A1-102006 017 824
- DE-A1-102006 051 317
- DE-A1-102007 020 279
- US-A1- 2009 198 408

## Beschreibung

Die Erfindung betrifft ein Vorrichtung zur Erkennung von ungewollten Triebstrangreaktionen eines Kraftfahrzeuges mit wenigstens einem Antriebsaggregat, bei welchem mindestens eine Eingangsgröße des Kraftfahrzeuges und/oder des Antriebsaggregates in den Triebstrang eingegeben wird und mindestens eine Ausgangsgröße am Kraftfahrzeug und/oder dem Antriebsaggregat gemessen wird.

In Triebsträngen von Kraftfahrzeugen ist eine direkte Messung von aktuell erzeugten Antriebsmomenten aus Kostengründen meist nicht vorgesehen. Aufgrund der Verwendung eines elektronischen Gaspedals ist keine mechanische Verbindung zum Antriebsaggregat vorhanden. Bei Softwarefehlern oder zum Beispiel aufgrund von Störungen in der Signalübertragung zwischen dem Gaspedal und dem das Antriebsaggregat ansteuernden Steuergerät, welches das vom Fahrer gewünschte Sollmoment aufnimmt und an das Antriebsaggregat weitergibt, kann es aber zu unbeabsichtigten Drehmoment- bzw. Leistungsabgaben des Antriebsaggregates kommen. Insbesondere bei Hybrid-, Hydraulik- oder Elektrofahrzeugen kann auch bei stehendem Fahrzeug ein Kraftschluss zwischen einem Antriebsaggregat und den Antriebsrädern vorliegen. Diese unerwünschte Momenten- oder Leistungsabgabe eines Antriebsaggregates, z.B. aufgrund eines Fehlers in der Datenkommunikation oder eines Bauteilfehlers kann dann eine sicherheitskritische Bewegung des Fahrzeuges hervorrufen, ohne dass der Fahrer dies wünscht.

Solche ungewollten Drehmoment- bzw. Leistungsabgaben erfolgen nicht nur bei Hybrid-, Elektro- oder Hydraulikfahrzeugen sondern auch bei Fahrzeugen mit konventionellem Verbrennungsmotorantrieb und müssen demzufolge auch bei diesen überwacht werden.

Die DE 10 2006 017 824 A1 offenbart ein Diagnoseparadigma für Fahrzeuge, bei dem die modellbasierte und die assoziative Diagnose kombiniert werden. Dadurch ergeben sich neue Ansätze in der Fehlerüberwachung und Fehlerreaktion bei Fahrzeugsystemen.

Aus der DE 102 60 838 A1 sind Verfahren und Vorrichtung zur Steuerung einer Kupplung innerhalb eines Kraftfahrzeugsantriebs bekannt, bei denen unererwünschte Drehzahlschwingungen durch eine Regelung verringert werden, ohne dass die Regelung andere Regelungen beeinflußt.

### Offenbarung der Erfindung

Die erfindungsgemäße Vorrichtung zur Erkennung von ungewollten Triebstrangreaktionen eines Kraftfahrzeuges mit wenigstens einem Antriebsaggregat mit den Merkmalen des Anspruchs 1 weist den Vorteil auf, dass mittels des dynamischen Modells eine frühzeitige Kenntnisnahme über eine Drehmomenten- und/oder Leistungsabgabe durch das Antriebsaggregat möglicht ist. Dadurch, dass mindestens eine Eingangsgröße des Kraftfahrzeuges und/oder des Antriebsaggregates (beispielsweise ein Drehmoment oder eine Leistung) einem, den Triebstrang des Kraftfahrzeuges zumindest teilweise nachbildenden dynamischen Modell zugeführt wird, wobei das dynamische Modell auf Grundlage der Eingangsgröße mindestens eine Modellausgangsgröße bestimmt, welche mit mindestens einer gemessenen Ausgangsgröße verglichen wird, wobei bei einem Unterschied zwischen der gemessenen Ausgangsgröße und der Modellausgangsgröße auf eine ungewollte Triebstrangreaktion geschlossen wird, kann eine Erkennung und gegebenenfalls eine Minimierung der ungewollten Triebstrangreaktionen des Kraftfahrzeuges erfolgen. Damit werden negative Auswirkungen, wie beispielsweise eine ungewollte Bewegung des Fahrzeuges vermieden oder mindestens minimiert, wodurch die Sicherheit im Fahrzeug erhöht wird. Durch die Verwendung des dynamischen Modells können Fehler im Antriebsstrang sehr schnell, beispielsweise im Millisekundenbereich, erkannt werden. Dadurch ist eine unverzügliche Reaktion des Kraftfahrzeuges zum Beispiel durch Betätigung der Bremsen auf diese Fehler möglich, um die Bewegung des Kraftfahrzeuges sicher zu verhindern.

Die Erfindung betrifft eine Vorrichtung zur Erkennung von ungewollten Triebstrangreaktionen eines Kraftfahrzeuges mit wenigstens einem Antriebsaggregat, bei welchem mindestens eine Eingangsgröße des Kraftfahrzeuges und/oder des Antriebsaggregates in den Triebstrang eingegeben wird und mindestens eine Ausgangsgröße am Kraftfahrzeug und/oder dem Antriebsaggregat gemessen wird. Um eine ungewollte Triebstrangreaktion frühzeitig zu erkennen und somit eine nennenswerte Fahrzeugbeschleunigung aufgrund der ungewollten Triebstrangreaktion sicher zu verhindern, sind Mittel vorhanden, welche die Eingangsgröße einem, den Triebstrang des Kraftfahrzeuges zumindest teilweise nachbildenden dynamischen Modell zuführen, wobei das dynamische Modell anhand der Eingangsgröße eine Modellausgangsgröße bestimmt, welche mit der gemessenen Ausgangsgröße verglichen wird, wobei bei einem Unterschied zwischen der gemessenen Ausgangsgröße und der Modellausgangsgröße auf eine ungewollte Triebstrangreaktion geschlossen wird. Dazu wird das dynamische Modell des realen Triebstranges berechnet. Das dynamische Modell erhält dazu Eingangsgrößen und Ausgangsgrößen des Kraftfahrzeuges und/oder des Antriebsaggregates, d.h. am realen Triebstrang ermittelte Größen, wie z.B. Solldrehmomente und/oder Aggregatedrehzahlen und/oder Raddrehzahlen. Bei fehlerfreiem Betrieb verhält sich das dynamische Modell genauso wie der reale Triebstrang, d.h. der Schwingungszustand am realen Triebstrang stimmt mit dem Schwingungszustand am dynamischen Modell überein. Aufgrund der Nachbildung des realen Triebstranges durch das dynamische Modell wird der Fehlerfall sehr frühzeitig erkannt, was beispielsweise innerhalb von 5 ms möglich ist. Zu diesem Zeitpunkt erfährt das Kraftfahrzeug noch keine nennenswerte Beschleunigung, so dass eine Bewegung beziehungsweise ungewollte Beschleunigung des Kraftfahrzeuges durch Einleitung von Sicherheitsmaßnahmen sicher unterbunden wird.

Erfindungsgemäß ist ein erstes, das dynamische Modell umfassende Steuergerät über eine, mindestens eine Eingangsgröße und/oder mindestens eine gemessene Ausgangsgröße übertragende Kommunikationseinrichtung mit einem zweiten Steuergerät verbunden. Mit zwei Steuergeräten kann jedes der beiden im Fehlerfall eine Sicherheitsmaßnahme einleiten. Damit entstehen eine Redundanz und eine hohe Sicherheit, auch bei einem Defekt in einem der beiden Steuergeräte.

Die Erfindung umfasst des Weiteren auch das erste Steuergerät ein erstes dynamisches Modell und das zweite Steuergerät ein zweites dynamisches Modell, wobei das erste Steuergerät mit einer Energieversorgung verbunden ist, während das zweite Steuergerät mit dem Antriebsaggregat verbunden ist. Dies hat den Vorteil, dass unabhängig voneinander zwei Abschaltpfade vorhanden sind, wodurch eine hohe Redundanz und Sicherheit entsteht. Insbesondere dann, wenn ein Steuergerät durch einen Software- oder Hardwarefehler gestört ist.

In einer Variante ist das erste Steuergerät als Fahrzeugsteuergerät und das zweite Steuergerät als Antriebsaggregatesteuergerät ausgebildet. Dadurch ist eine Redundanz vorhanden, wobei bei Störungen des Fahrzeugsteuergerätes die Ermittlung des dynamischen Modells unterbrochen werden kann, wodurch das Antriebsaggregatesteuergerät das Antriebsaggregat ohne nachteilige Beeinflussung steuern und regeln beziehungsweise abschalten kann.

In einer Ausgestaltung wird beim Vorhandensein von mehreren gemessenen Ausgangsgrößen und mehreren Modellausgangsgrößen eine der gemessenen Ausgangsgrößen mit einer zugeordneten Modellausgangsgröße verglichen. Dadurch erhöht sich die Vielfalt der möglichen Vergleiche der Messgrößen, was dazu führt, dass die Zuverlässigkeit des Vergleiches erhöht wird.

Vorteilhafterweise wird eine Störgröße des Triebstranges des Kraftfahrzeuges im dynamischen Modell abgeschätzt. Fehler im realen Triebstrand wirken sich als Störgrößen auf den realen Triebstrang aus. Da Störgrößen, welche auf das reale System des Triebstranges einwirken, an dem realen System des Triebstranges nicht gemessen werden können, besteht bei der vorliegenden Erfindung die Möglichkeit, die Störgröße über das dynamische Modell zu bewerten, wobei sich eine Größenordnung der Störgröße zuverlässig ermitteln lässt. Da die nur auf das reale System des Triebstranges wirkende Störgröße einen Unterschied zwischen der am Triebstrang, am Kraftfahrzeug und/oder am Antriebsaggregat gemessenen Ausgangsgröße und der Modellausgangsgröße des dynamischen Modells erzeugt, kann die Störgröße mathematisch ermittelt werden.

In einer Ausgestaltung wird der Wert der Störgröße des Triebstranges des Kraftfahrzeuges im dynamischen Modell durch Methoden der Störgrößenbeobachtung abgeschätzt. Mit dieser an sich aus der Mess- und Regelungstechnik bekannten Störgrößenabschätzung wird die Realität des Triebstranges nachgebildet beziehungsweise so abgeschätzt, damit das dynamische Modell mit der Realität in seinen dynamischen Ausmaßen übereinstimmt.

In einer Weiterbildung wird der Wert der Störgröße des Triebstranges des Kraftfahrzeuges im dynamischen Modell mit mindestens einem Schwellwert verglichen, wobei bei Überschreitung eines ersten Schwellwertes oder Unterschreitung eines zweiten Schwellwertes durch den Wert der Störgröße mindestens ein Antriebsaggregat des Kraftfahrzeuges beeinflusst oder abgeschaltet wird. Durch die Störgrößenabschätzung im dynamischen Modell können sicherheitskritische Situationen im Kraftfahrzeug zuverlässig erkannt werden.

In einer Variante ist der Schwellwert von einem Betriebszustand des Triebstranges abhängig. So wird z.B. bei sehr dynamischen und/oder betragsmäßig hohem Solldrehmoment/Sollleistung bei erkannten Fahrbahnunebenheiten, bei erkannter eisglatter Fahrbahn, erkannten Triebstrangschwingungen, beim Bremsen, ABS- oder ESP-Eingriffen oder bei Getriebeschaltungen der erste Schwellwert erhöht.

Ferner wird der abgeschätzte Wert der Störgröße auf den, den Triebstrang des Kraftfahrzeuges zumindest teilweise nachbildenden Teil des dynamischen Modells zurückgeführt. Durch diese Rückführung erfolgt eine Annäherung zwischen dynamischem Modell und dem realen Verhalten des Triebstranges.

Vorteilhafterweise werden ein Drehmoment und/oder eine Leistung des Antriebsaggregates als Eingangsgröße genutzt und/oder als Störgröße abgeschätzt genutzt. Drehmoment und Leistung des Antriebsaggregates sind typische Parameter für eine beabsichtigte Veränderung im Verhalten des Antriebsaggregates, welches auf das Kraftfahrzeug übertragen wird. Werden ein Drehmoment oder eine abgeschätzte Leistung verwendet, so erfolgt die Momenten- bzw. Leistungsbeeinflussung des Triebstranges oder eine Abschaltung des mindestens einen Antriebsaggregates oder eine Aktivierung eines Bremssystems immer dann, wenn eine Abweichung des Drehmomentes oder der Leistung von einem Solldrehmoment oder einer Sollleistung größer als eine erlaubte Abweichung wird.

In einer Ausgestaltung wirken das Drehmoment und/oder die Leistung des Antriebsaggregates auf die Massenträgheiten der bewegten Teile des mindestens einen Antriebsaggregates ein. So wirkt beispielsweise ein Luftspaltmoment auf den Rotor einer Elektromaschine oder Momente infolge der Gas- und Reibungskräfte auf den Kurbeltrieb eines Verbrennungsmotors. Für diese Größen werden von einer Steuerung meist Sollwerte vorgegeben, die geeignet sind, für den direkten Vergleich mit ermittelten oder abgeschätzten Istwerten.

In einer Weiterbildung nutzt oder schätzt das dynamische Modell ein Solldrehmoment, eine Sollleistung, ein berechnetes Istdrehmoment und/oder eine berechnete Istleistung des Antriebsaggregates. Das dynamische Modell ist demzufolge so ausgebildet, dass es vom realen Antriebsstrang aufgenommene bzw. abgegebene Größen dynamisch aufnehmen und nachbilden kann. Damit ist eine Identität zwischen dem realen Antriebsstrang und dem dynamischen Modell gegeben.

In einer anderen Variante bildet das dynamische Modell eine Ansteuerdynamik des mindestens einen Antriebsaggregates und/oder weiterer Aggregate nach. Die weiteren Aggregate können zusätzliche Antriebsaggregate wie Elektromaschinen, Hydraulik- und Verbrennungsmotoren sein oder auch Aggregate wie Kupplungen, Drehmomentwandler, Wandlerüberbrückungskupplungen und Getriebe, die auf eine Ansteuerung dynamisch reagieren.

Ferner bildet das dynamische Modell die Aggregategrenzen des mindestens einen Antriebsaggregates und weiterer Aggregate nach.

Insbesondere bildet das dynamische Modell Zeitverzögerungen in einer elektronischen Signalübertragung nach und/oder kompensiert diese. Damit können die gemessene Ausgangsgröße als auch die durch das dynamische Modell bestimmte Modellausgangsgröße verglichen werden, als wenn diese zum selben Zeitpunkt aufgetreten wären.

Vorteilhafterweise bildet das dynamische Modell Drehmomente und/oder Leistungen von mechanisch angetriebenen Nebenaggregaten nach. Zu solchen Nebenaggregaten gehören Lenkhilfepumpen, Klimakompressoren, Kühlmittelpumpen und ähnliches. Die Berücksichtigung des dynamischen Verhaltens dieser Nebenaggregate erlaubt eine sehr genaue Nachbildung des Schwingungsverhaltens des Triebstranges des Kraftfahrzeuges.

In einer weiteren Ausgestaltung bildet das dynamische Modell Massenträgheiten der rotierenden Teile der mechanisch angetriebenen Nebenaggregate nach. Auch diese Nachbildungen tragen zu einer realitätsnahen Darstellung des dynamischen Modells bei.

In einer Weiterbildung bildet das dynamische Modell Elastizitäten und/oder mechanisches Spiel in den Aufhängungen des Antriebsaggregates und/oder in den Aufhängungen weiterer Aggregate und/oder in einem Fahrwerk und/oder im Triebstrang zumindest teilweise nach. Die Berücksichtigung von beispielsweise mechanischem Spiel und Elastizitäten in den Aufhängungen der Aggregate oder Radaufhängungen sowie von Elastizitäten der Reifen verbessert die Nachbildung des Schwingungsverhaltens eines Kraftfahrzeuges.

Vorteilhafterweise werden das dynamische Modell bzw. die Parameter des dynamischen Modells anhand eines zeitlichen Verlaufes mindestens einer Eingangsgröße und/oder mindestens einer gemessenen Ausgangsgröße adaptiert. Damit werden Verschleiß- und Alterungseffekte oder Temperaturabhängigkeiten der Parameter berücksichtigt.

Die Erfindung lässt zahlreiche Ausführungsformen zu. Eine davon soll anhand der in der Zeichnung dargestellten Figuren näher erläutert werden.

Es zeigt:
- Figur 1:: ein vereinfachtes Modell eines Antriebsstranges
- Figur 2:: Nachbildung des Antriebsstranges nach Figur 1
- Figur 3:: ein Signalflussdiagramm für ein Ausführungsbeispiel des Verfahrens
- Figur 4:: Simulationsergebnisse für einen Anfahrvorgang des Kraftfahrzeuges
- Figur 5:: ein Ausführungsbeispiel für die erfindungsgemäße Vorrichtung.

Gleiche Merkmale sind mit gleichen Bezugszeichen gekennzeichnet.

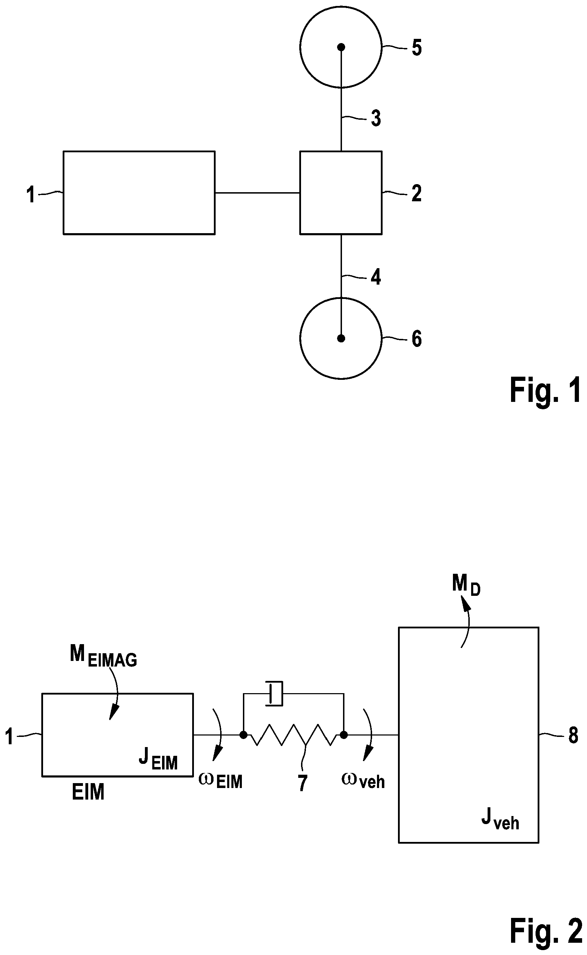

In Figur 1 ist ein vereinfachtes Modell eines Triebstranges dargestellt, welches eine Elektromaschine 1 umfasst, die über ein Getriebe 2 und Seitenwellen 3, 4 die Antriebsräder 5, 6 des Kraftfahrzeuges antreibt. Das Getriebe 2 ist nicht schaltbar, enthält also nur einen Gang und stellt dauerhaft Kraftschluss zwischen der Elektromaschine 1 und den Antriebsrädern 5, 6 her. Bei stillstehenden Antriebsrädern 5, 6 steht der Rotor der Elektromaschine 1.

Der Grundgedanke der vorliegenden Erfindung besteht darin, dass ein dynamisches Modell oder Teilmodell des schwingungsfähigen Triebsstranges des Kraftfahrzeuges berechnet wird.

Eine schwingungsfähige Nachbildung des elektrischen Triebsstranges aus Figur 1 ist in Figur 2 dargestellt. Die rotatorischen trägen Massen der Elektromaschine 1 und des Getriebes 2 sind in der Ersatzdrehmasse EIM nachgebildet. Die Ersatzdrehmasse EIM ist über ein Drehfeder-/Dämpferelement 7 mit einer Ersatzdrehmasse 8 des Kraftfahrzeuges verbunden, welche die reduzierten Trägheiten von Triebstrangteilen, Rädern und der translatorisch bewegten Fahrzeugmasse nachbildet. Das Drehfeder-/Dämpferelement 7 bildet Elastizitäten im Triebstrang nach, die meist von den Steifigkeiten der Seitenwellen 3, 4 geprägt sind. Der Einfachheit halber sind sämtliche Trägheiten, Winkelgeschwindigkeiten und Drehmomente sowie weitere Parameter mit den realen Übersetzungen des Getriebes 2 bzw. den Reifenhalbmessern umgerechnet und reduziert, so dass in Figur 2 von Übersetzungen i=1 ausgegangen wird.

Die in Figur 2 dargestellte Ersatzdrehmasse EIM der Elektromaschine 1 und des Getriebes 2 rotiert mit der Winkelgeschwindigkeit ω_{EIM}, die von einem nicht dargestellten Drehzahlgeber ermittelt und einer Fahrzeugsteuerung gemeldet wird. Die Ersatzdrehmasse EIM besitzt das Trägheitsmoment J_{EIM}, das sich aus den Trägheiten vom Rotor der Elektromaschine 1 und von rotierenden Teilen des Getriebes 2 zusammensetzt. Auf die Ersatzdrehmasse EIM wirkt das von der Elektromaschine 1 erzeugte Luftspaltdrehmoment M_{EIMAG} sowie das vom Drehfeder-/Dämpferelement 7 aktuell übertragene Moment M_{SD}.

Die Ersatzdrehmasse 8 bildet mit dem Trägheitsmoment J_{Veh} des Kraftfahrzeuges weitere Triebstrangteile, Räder und die translatorisch bewegte Fahrzeugmasse nach und rotiert mit der Winkelgeschwindigkeit ω_{Veh}. Die Winkelgeschwindigkeit ω_{Veh} kann im realen Antrieb z.B. aus den Signalen von Raddrehzahlgebern an den beiden Antriebsrädern durch Mittelung und unter Berücksichtigung der Getriebeübersetzung berechnet werden. Die Winkelgeschwindigkeit ω_{Veh} ist in der Fahrzeugsteuerung verfügbar. Auf die Ersatzdrehmasse 8 wirken das vom Drehfeder-/Dämpferelement 7 aktuell übertragene Moment M_{SD} und ein Fahrwiderstandsmoment M_{D}, das den Roll-, Luft- und Steigungswiderstand nachbildet.

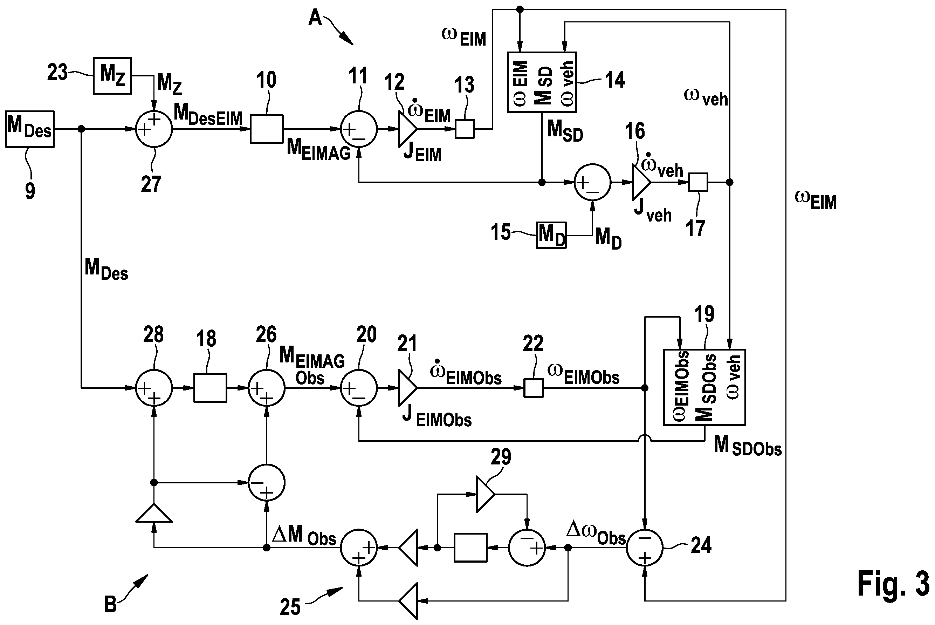

In Figur 3 ist ein Signalflussdiagramm für eine Ausprägung des Verfahrens dargestellt. Im oberen Teil A der Figur 3 ist der reale schwingungsfähige Triebstrang nachgebildet. Ein Block 9 gibt ein Sollmoment M_{Des} vor, das aus der Stellung eines Fahrpedals ermittelt und/oder von einem Fahrerassistenzsystem bzw. einem Fahrstabilitätssystem vorgegeben wird. Im Allgemeinen kann das Sollmoment M_{Des} auch von einer Leerlaufregelung oder einem automatisierten Getriebe beeinflusst werden. Das Sollmoment M_{Des} kann abhängig vom Betriebszustand des Triebstranges geformt, z.B. tiefpaßgefiltert oder gradientenbegrenzt sein, um keine Triebstrangschwingungen anzuregen.

Im Block 10 sind dynamische Effekte im Ansteuerverhalten der Elektromaschine 1 hinterlegt, die z.B. sich durch eine Stromregelung sowie Induktivitäten ergeben. Im Folgenden wird von einer Übertragung mit Verzögerung erster Ordnung (PT1) von einem Sollmoment M_{DesEIM} auf das Luftspaltdrehmoment M_{EIMAG} ausgegangen. Das Luftspaltdrehmoment M_{EIMAG} entspricht dem real wirkenden Istmoment der Elektromaschine 1 und folgt dem Sollmoment M_{DesEIM} verzögert.

Auf die Ersatzdrehmasse EIM wirkt das von der Elektromaschine 1 erzeugte Luftspaltdrehmoment M_{EIMAG} sowie das vom Drehfeder-/Dämpferelement 7 aktuell übertragene Moment M_{SD}. Beide Drehmomente M_{EIMAG} und M_{SD} werden im Knotenpunkt 11 zusammengefasst. Durch Division mit dem Trägheitsmoment J_{EIM} der Ersatzdrehmasse EIM im Block 12 und Integration im Block 13 ergibt sich die Winkelgeschwindigkeit ω_{EIM} der Ersatzdrehmasse EIM. Ein entsprechendes Vorgehen in den Blöcken 16 und 17 führt zu der Winkelgeschwindigkeit ω_{Veh} der Ersatzdrehmasse 8. Das vom Drehfeder-/Dämpferelement 7 aktuell übertragene Moment M_{SD} wird im Block 14 ermittelt, das Fahrwiderstandsmoment M_{D} wird im Block 15 nachgebildet.

Der untere Teil B der Figur 3 zeigt eine mögliche Ausgestaltung des Verfahrens mit dem dynamischen Modell beziehungsweise Teilmodell des Triebstranges. Die am realen Antriebsstrang ermittelten Winkelgeschwindigkeiten ω_{EIM} der Ersatzdrehmasse EIM und ω_{Veh} der Ersatzdrehmasse 8 sowie das Sollmoment M_{Des} werden dem dynamischen Modell gemeldet. Im Block 18 ist die Ansteuerdynamik der Elektromaschine 1 als Verzögerung erster Ordnung modelliert. Das so berechnete modellierte Luftspaltmoment M_{EIMAGObs} wird mit einem im Block 19 modellierten Moment M_{SDobs} des Drehfeder-/Dämpferelements im Knotenpunkt 20 zusammengefasst und durch das geschätzte Trägheitsmoment J_{EIMObs} der Ersatzdrehmasse EIM geteilt (Block 21). Ein Integrator 22 berechnet daraus einen Schätzwert ω_{EIMObs} für die Winkelgeschwindigkeit ω_{EIM} der Ersatzdrehmasse EIM. Die geschätzte Winkelgeschwindigkeit ω_{EIMObs} der Ersatzdrehmasse EIM und die Winkelgeschwindigkeit ω_{Veh} der Ersatzdrehmasse 8 werden von einem Modell des Drehfeder-/Dämpferelementes, welches im Block 19 dargestellt ist, benutzt, um das modellierte Moment M_{SDObs} zu ermitteln.

Bei idealen Verhältnissen fallen die am realen Triebstrang ermittelte Winkelgeschwindigkeit ω_{EIM} und die geschätzte Winkelgeschwindigkeit ω_{EIMObs} der Ersatzdrehmasse EIM zusammen. Bei unerwünschter Momentenabgabe der Elektromaschine 1, z.B. aufgrund eines Fehlers in der Datenkommunikation oder eines Software- oder Bauteilfehlers, weichen die beiden Größen ω_{EIM} und ω_{EIMObs} voneinander ab. Eine unerwünschte Momentenabgabe der Elektromaschine 1 wirkt nur am realen Triebstrang und damit auf die ermittelte Winkelgeschwindigkeit ω_{EIM}, aber nicht auf das dynamische Modell und damit nicht auf die geschätzte Winkelgeschwindigkeit ω_{EIMObs} Eine unerwünschte Momentenabgabe der Elektromaschine 1 wird in Figur 3 durch ein Störmoment M_{z} im Block 23 nachgebildet. Das Störmoment Mz wirkt am realen Triebstrang, wird dort aber nicht gemessen.

Um das Störmoment Mz abzuschätzen, wird im Sinne eines Störgrößenbeobachters die Differenz Δω_{Obs} der beiden Größen ω_{EIM} und ω_{EIMObs} im Knotenpunkt 24 gebildet und über eine proportional-integrale Rückführung 25 als Störgrößenbeobachter-Korrekturmoment ΔM_{Obs} dem modellierten Luftspaltmoment M_{EIMAGObs} im Knotenpunkt 28 aufgeschaltet. Damit wird die geschätzte Winkelgeschwindigkeit ω_{EIMObs} an die ermittelte Winkelgeschwindigkeit ω_{EIM} herangeführt. Das hierfür erforderliche Störgrößenbeobachter-Korrekturmoment ΔM_{Obs} entspricht dann einem Schätzwert für das Störmoment M_{z}.

Es wird dabei davon ausgegangen, dass das Störmoment Mz am realen Triebstrang mit der Ansteuerdynamik der Elektromaschine 1 (Block 10) auf das Luftspaltmoment M_{EIMAG} wirkt, weshalb es vor dem Block 10 im Knotenpunkt 27 aufgeschaltet wird.

Das Störgrößenbeobachter-Korrekturmoment ΔM_{Obs} soll eine Abschätzung für das Störmoment Mz darstellen, also dem Störmoment M_{z} näherungsweise folgen. Da das Störmoment M_{z} vor der Ansteuerdynamik der Elektromaschine 1 wirkt, wird das Störgrößenbeobachter-Korrekturmoment ΔM_{Obs} größtenteils (beispielsweise zu 80 %) im Knotenpunkt 28 vor der modellierten Ansteuerdynamik (Block 18) auf das Modell aufgeschaltet. Die beiden Größen Mz und ΔM_{Obs} können in den Simulationen direkt miteinander verglichen werden.

Um ein Aufschwingen des Störgrößenbeobachters zu vermeiden, wird ein kleiner Teil desStörgrößenbeobachter- Korrekturmomentes ΔM_{Obs} (beispielsweise 20 %) hinter der modellierten Ansteuerdynamik nach Block 18 im Knotenpunkt 26 auf den Störgrößenbeobachterpfad aufgeschaltet. Dies hat dämpfenden Einfluss. Um Stabilitätsprobleme durch das Zusammenwirken eines integrierenden Verhaltens im Modell des Drehfeder-/Dämpferelementes (Block 19) mit dem Integral-Anteil des Störgrößenbeobachter-Korrekturmomentes ΔM_{Obs} zu vermeiden, wird eine stabilisierende Rückführung (Block 29) für den Integral-Anteil eingesetzt.

Das Störgrößenbeobachter-Korrekturmoment ΔM_{Obs} wird mit Momentenschwellen verglichen und führt zur Momentenreduzierung oder Abschaltung der Elektromaschine 1, wenn es eine obere Schwelle über- oder eine untere Schwelle unterschreitet. Auch ein Eingriff in das Bremssystem ist in diesem Fall möglich. Die Momentenschwellen werden abhängig vom Betriebszustand des Antriebs modifiziert, z.B. bei sehr dynamischen und/oder betragsmäßig hohem Sollmoment M_{Des} aufgeweitet.

Im dynamischen Modell wird das Sollmoment M_{Des} auf die Momentengrenzen der Elektromaschine 1 limitiert, da die reale Elektromaschine 1 auch nur Momente innerhalb ihrer Aggregategrenzen stellen kann. Eine solche Limitierung ist der Einfachheit halber in Figur 3 nicht dargestellt.

Im vorliegenden Beispiel wird die Schwingungsfähigkeit des realen Antriebs ausgenutzt. Bei einer unerwünschten Momentenabgabe der Elektromaschine 1 reagiert die am realen Triebstrang ermittelte Winkelgeschwindigkeit ω_{EIM} noch bevor sich nennenswerte Auswirkungen auf die Winkelgeschwindigkeit ω_{Veh} der Ersatzdrehmasse 8 bzw. die Fahrzeugbewegung ergeben. Dies ermöglicht eine frühzeitige Reaktion. Das Verfahren greift insbesondere bei kleinen Drehzahlen bzw. im Fahrzeugstillstand und bei großen Gradienten beziehungsweise sehr dynamischen Verhalten des Störmomentes M_{z}, die ein hohes Sicherheitsrisiko darstellen. Auf ein sich mit geringen Gradienten langsam aufbauendes Störmoment Mz kann der Fahrer selbständig reagieren.

Die Parameter des realen Triebstranges sind eventuell nicht genau bekannt bzw. verändern sich über der Lebensdauer. Um realistische Verhältnisse zu schaffen, ist die Verzögerung (PT1-Zeitkonstante) der modellierten Ansteuerdynamik der Elektromaschine 1 (Block 18) gegenüber der realen Ansteuerdynamik der Elektromaschine 1 (Block 10) um 25 % verkleinert. Die Federsteifigkeit und Dämpfung im Modell des Drehfeder-/Dämpferelementes (Block 19) sind gegenüber dem realen Drehfeder-/Dämpferelement 7(Beziehungsweise Block 14) um 10 % verringert. Im Betrieb ist eine Adaption der Modellparameter an die Parameter des realen Antriebs sinnvoll, eine Abweichung von 10 % erscheint daher realistisch.

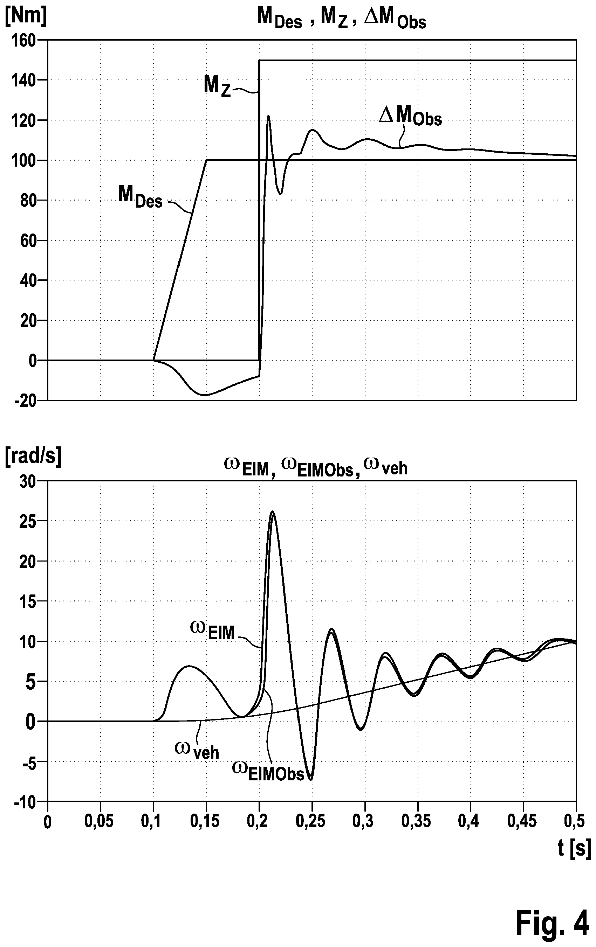

Figur 4 zeigt Simulationsergebnisse für einen Anfahrvorgang des Fahrzeuges mit einem vom Fahrer rampenförmig vorgegebenen Sollmoment M_{Des}. Das Störgrößenbeobachter-Korrekturmoment ΔM_{Obs} fällt aufgrund der oben beschriebenen Parameterabweichung zunächst etwas ab. Zum Zeitpunkt t=0,2 s springt das Störmoment Mz von 0 Nm auf 150 Nm. Eine entsprechende Störung kann am realen Antrieb z.B. aufgrund eines Fehlers in der Datenkommunikation oder eines Bauteilfehlers entstehen. Die Reaktion des Störgrößenbeobachter-Korrekturmomentes ΔM_{Obs}, das einen Schätzwert für das Störmoment M_{z} darstellt, ist deutlich zu erkennen. So kann z.B. die Elektromaschine 1 abgeschaltet werden, sobald das Störgrößenbeobachter-Korrekturmoment ΔM_{Obs} eine Momentenschwelle von 40 Nm überschreitet. Der Abschaltbefehl kann dabei unter 5 ms nach der Störung gesetzt werden, also in einem Zeitraum, in dem die Winkelgeschwindigkeit ω_{Veh} und damit die Fahrzeugbewegung noch nicht auf die Störung reagiert hat. In Figur 4 sind die Verläufe der Winkelgeschwindigkeiten ω_{EIM}, ω_{EIMObs} und ω_{Veh} dargestellt.

Die Winkelgeschwindigkeit ω_{Veh} wirkt am realen Antrieb und auf das dynamische Modell gleichermaßen. Damit ergibt sich eine hohe Robustheit des Verfahrens gegenüber Schwingungsanregungen durch Fahrbahnunebenheiten, bei eisglatter Fahrbahn, bei Bremsen-, ABS- oder ESP-Eingriffen. Wie oben dargestellt, werden die Momentenschwellen zum Vergleich mit dem Störgrößenbeobachter-Korrekturmoment ΔM_{Obs} abhängig vom Betriebszustand des Antriebs modifiziert. Daneben kann der Integral-Anteil des Störgrößenbeobachter-Korrekturmomentes ΔM_{Obs} abhängig vom Betriebszustand des Antriebs modifiziert bzw. initialisiert werden.

Das Störgrößenbeobachter-Korrekturmoment ΔM_{Obs} stellt einen Schätzwert für das Störmoment Mz dar, beschreibt also eine Abweichung des Istdrehmomentes der Elektromaschine 1 vom Solldrehmoment. Das Modell kann auch eingesetzt werden, um ein betragsmäßig zu geringes Drehmoment an einem Antriebsaggregat zu detektieren und Maßnahmen dagegen zu ergreifen, z.B. indem ein weiteres Antriebsaggregat den fehlenden Momentenanteil ausgleicht. Auch ein zu stark verzögerndes Drehmoment kann detektiert und z.B. die Elektromaschine 1 abgeschaltet werden, falls die Gefahr besteht, dass die Antriebsräder 5, 6 zu stark verzögern oder blockieren.

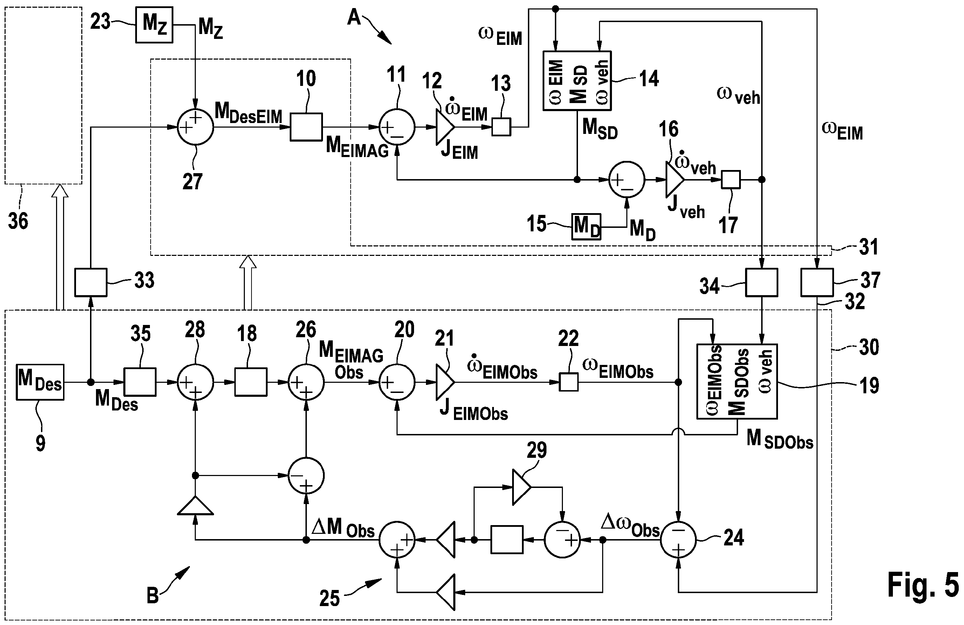

Figur 5 zeigt eine mögliche Ausbildung einer Vorrichtung zur Durchführung des Verfahrens, wobei in einem ersten Steuergerät 30, das als Fahrzeugsteuergerät ausgebildet ist, das Sollmoment M_{Des} bestimmt und über ein Bussystem 32 an ein zweites Steuergerät 31 übermittelt wird, wobei das zweite Steuergerät 31 als Elektromaschinensteuergerät ausgebildet ist. Das erste Steuergerät 30 erhält die Winkelgeschwindigkeiten ω_{EIM} und ω_{Veh}, die ebenfalls über das Bussystem 32 gemeldet werden. Aus Sicherheitsgründen kann das erste Steuergerät 30 die zur Ermittlung der Winkelgeschwindigkeiten ω_{EIM} und ω_{Veh} erforderlichen Gebersignale auch direkt einlesen. Es können auch eigene, dem ersten Steuergerät 30 zugeordnete Geber verbaut sein.

Signallaufzeiten der Datenübertragung sind in den Blöcken 33, 34 und 37 nachgebildet. Das dynamische Modell wird im ersten Steuergerät 30 berechnet. Die Signallaufzeiten werden im ersten Steuergerät 30 kompensiert. Dies erfolgt, indem das Sollmoment M_{Des} mit Hilfe eines Blocks 35 so verzögert wird, dass die Reaktion des Modells in Form der Winkelgeschwindigkeit ω_{EIMObs} mit den im Steuergerät 30 verfügbaren, verzögerten Werten der Winkelgeschwindigkeiten ω_{EIM} und ω_{Veh} zeitlich zusammenpasst. Im Falle eine detektierten unerwünschten Momentenabgabe der Elektromaschine 1 werden die Elektromaschine 1 und/oder eine Energieversorgung 36 abgeschaltet. Diese Abschaltung erfolgt vorzugsweise mittels eines Hardwaresignals und ist aus Sicherheitsgründen redundant ausgestaltet. Dazu sendet das erste Steuergerät 30 an das zweite Steuergerät 31 ein Abschaltsignal für die Elektromaschine 1. Alternativ oder ergänzend wird vom ersten Steuergerät 30 ein entsprechendes Abschaltsignal an die Energieversorgung 36 ausgegeben.

In einer weiteren Ausbildung wird im ersten Steuergerät 30 ein erstes dynamisches Modell und gleichzeitig im zweiten Steuergerät 31 ein zweites dynamisches Modell berechnet. Bei Detektion einer unerwünschten Momentenabgabe der Elektromaschine 1 mit Hilfe des ersten dynamischen Modells schaltet das erste Steuergerät 30 die Energieversorgung 36 ab. Wird mit Hilfe des zweiten dynamischen Modells eine unerwünschte Momentenabgabe der Elektromaschine 1 detektiert, so schaltet das zweite Steuergerät 31 die Elektromaschine ab. Mit diesen beiden getrennten dynamischen Modellen und zwei Abschaltpfaden entsteht eine hohe Redundanz und eine Sicherheit gegenüber z.B. einem Software- oder Hardwarefehler in einem der beiden Steuergeräte 30 oder 31, der eine erforderliche Abschaltung verhindern würde. Die Redundanz kann nochmals erhöht werden, wenn dem ersten Steuergerät 30 und dem zweiten Steuergerät 31 unterschiedliche Geber zugeordnet sind. Damit erfolgt auch die Erfassung von Eingangs- und Ausgangsgrößen des Triebstrangs beziehungsweise des Kraftfahrzeuges und/oder der Elektromaschine 1 redundant, die den beiden dynamischen Modellen zugeführt werden.

Das dynamische Modell oder Teilmodell des Triebstranges kann Antriebsaggregate wie Elektromaschinen und Hydraulik- sowie Verbrennungsmotoren oder Aggregate wie Kupplungen, Drehmomentwandler, Wandlerüberbrückungskupplungen, Getriebe und Gelenkwellen, das Fahrwerk mitsamt Bremssystem und den Reifen sowie zugehörige Steuerungen nachbilden. Von Antriebsaggregaten, Aggregaten und Fahrwerk beziehungsweise deren Aufhängungen können Trägheiten, Elastizitäten, mechanisches Spiel, Reibung, Verluste, dynamisches Verhalten, Grenzen und die Ansteuerdynamik modelliert sein. Eine Adaption der Modellparameter an die Parameter des realen Triebstranges ist sinnvoll.

Das dargestellte Verfahren kann bei Hybrid-, Elektro- oder Hydraulikfahrzeugen aber auch Fahrzeugen mit konventionellem Verbrennungsmotorantrieb eingesetzt werden.

## Patentansprüche

1. Vorrichtung zur Erkennung von ungewollten Triebstrangreaktionen eines Kraftfahrzeuges mit wenigstens einem Antriebsaggregat, bei welchem mindestens eine Eingangsgröße (M_{Des}) des Kraftfahrzeuges und/oder des Antriebsaggregates (1) in den Triebstrang eingegeben wird und mindestens eine Ausgangsgröße (ω_{EIM}) am Kraftfahrzeug und/oder dem Antriebsaggregat (1) gemessen wird,
wobei Mittel vorhanden sind, welche die mindestens eine Eingangsgröße (M_{Des}) einem, den Triebstrang des Kraftfahrzeuges zumindest teilweise nachbildenden dynamischen Modell zuführen, wobei das dynamische Modell auf Grundlage der mindestens einen Eingangsgröße (M_{Des}) mindestens eine Modellausgangsgröße (ω_{EIMObs}) bestimmt, welche mit der mindestens einen gemessenen Ausgangsgröße (ω_{EIM}) verglichen wird, wobei bei einem Unterschied zwischen der gemessenen Ausgangsgröße (ω_{EIM}) und der Modellausgangsgröße (ω_{EIMObs}) auf eine ungewollte Triebstrangreaktion geschlossen wird,
**dadurch gekennzeichnet, dass**
ein erstes, das dynamische Modell umfassendes Steuergerät (30) über eine, mindestens eine Eingangsgröße (MDes) und/oder mindestens eine gemessene Ausgangsgröße (ωEIM), ωVeh) übertragende Kommunikationseinrichtung (32) mit einem zweiten Steuergerät (31) verbunden ist, wobei das erste Steuergerät (30) ein erstes dynamisches Modell umfasst und das zweite Steuergerät (31) ein zweites dynamisches Modell umfasst, wobei das erste Steuergerät (30) mit einer Energieversorgung (36) verbunden ist, während das zweite Steuergerät (31) mit dem Antriebsaggregat (1) verbunden ist.

2. Vorrichtung nach Anspruch 1, **dadurch gekennzeichnet, dass** das erste Steuergerät (30) als Fahrzeugsteuergerät und das zweite Steuergerät (31) als AntriebsaggregateSteuergerät ausgebildet ist.

3. Vorrichtung nach Anspruch 1 **dadurch gekennzeichnet, dass** beim Vorhandensein von mehreren gemessenen Ausgangsgrößen (ω_{EIM}) und mehreren Modellausgangsgrößen (ω_{EIMObs}) eine der gemessenen Ausgangsgrößen (ω_{EIM}) mit einer zugeordneten Modellausgangsgröße (ω_{EIMObs}) verglichen wird.

4. Vorrichtung nach einem der vorherigen Ansprühe, **dadurch gekennzeichnet, dass** eine Störgröße (M_{z}) des Triebstranges des Kraftfahrzeuges im dynamischen Modell abgeschätzt wird.

5. Vorrichtung nach Anspruch 4, **dadurch gekennzeichnet, dass** ein Wert (ΔM_{ObS}) der Störgröße (M_{z}) des Triebstranges des Kraftfahrzeuges im dynamischen Modell durch Methoden der Störgrößenbeobachtung abgeschätzt wird.

6. Vorrichtung nach Anspruch 4 oder 5, **dadurch gekennzeichnet, dass** der Wert (ΔM_{Obs}) der Störgröße (M_{z}) des Triebstranges des Kraftfahrzeuges im dynamischen Modell mit mindestens einem Schwellwert verglichen wird, wobei bei Überschreitung eines ersten Schwellwertes oder Unterschreitung eines zweiten Schwellwertes durch den Wert (ΔM_{ObS}) der Störgröße (M_{z}) mindestens ein Antriebsaggregat (1) des Kraftfahrzeuges beeinflusst oder abgeschaltet wird.

7. Vorrichtung nach Anspruch 6, **dadurch gekennzeichnet, dass** der Schwellwert von einem Betriebszustand des Triebstranges abhängt.

8. Vorrichtung nach Anspruch 5, **dadurch gekennzeichnet, dass** der abgeschätzte Wert (ΔM_{Obs}) der Störgröße (M_{z}) auf den, den Triebstrang des Kraftfahrzeuges zumindest teilweise nachbildenden Teil des dynamischen Modells zurückgeführt wird.

9. Vorrichtung nach mindestens einem der vorhergehenden Ansprüche, **dadurch gekennzeichnet, dass** ein Drehmoment und/oder eine Leistung des Antriebsaggregates (1) als Einganggröße genutzt und/oder als Störgröße (M_{z}) abgeschätzt wird, wobei das dynamische Modell ein Solldrehmoment, eine Sollleistung, ein berechnetes Istdrehmoment und/oder eine berechnete Istleistung des Antriebsaggregates (1) nutzt und/oder abschätzt.

10. Vorrichtung nach mindestens einem der vorhergehenden Ansprüche, **dadurch gekennzeichnet, dass** das dynamische Modell eine Ansteuerdynamik des mindestens einen Antriebsaggregates (1) und/oder weiterer Aggregate nachbildet.

11. Vorrichtung nach mindestens einem der vorhergehenden Ansprüche, **dadurch gekennzeichnet, dass** das dynamische Modell Drehmomente und/oder Leistungen von mechanisch angetriebenen Nebenaggregaten nachbildet.

12. Vorrichtung nach mindestens einem der vorhergehenden Ansprüche, **dadurch gekennzeichnet, dass** das dynamische Modell Elastizitäten und/oder mechanisches Spiel in den Aufhängungen des Antriebsaggregates (1) und/oder in den Aufhängungen weiterer Aggregate und/oder in einem Fahrwerk und/oder im Triebstrang zumindest teilweise nachbildet.

13. Vorrichtung nach mindestens einem der vorhergehenden Ansprüche, **dadurch gekennzeichnet, dass** das dynamische Modell bzw. die Parameter des dynamischen Modells anhand eines zeitlichen Verlaufes mindestens einer Eingangsgröße (M_{Des}) und/oder mindestens einer gemessenen Ausgangsgröße (ω_{EIM}) adaptiert werden.

## Claims

1. Device for detecting unwanted drive train reactions of a motor vehicle having at least one drive unit, in which at least one input variable (M_{Des}) of the motor vehicle and/or of the drive unit (1) is input into the drive train, and at least one output variable (ω_{EIM}) is measured at the motor vehicle and/or the drive unit (1),
wherein means are present which feed the at least one input variable (M_{Des}) to a dynamic model which at least partially models the drive train of the motor vehicle, wherein the dynamic model determines, on the basis of the at least one input variable (M_{Des}), at least one model output variable (ω_{EIMObs}) which is compared with the at least one measured output variable (ω_{EIM}), wherein when there is a difference between the measured output variable (ω_{EIM}) and the model output variable (W_{EIMObs}), an undesired drive train reaction is inferred,
**characterized in that**
a first control unit (30) which comprises the dynamic model is connected to a second control unit (31) via a communication device (32) which transmits at least one input variable (MDes) and/or at least one measured output variable (ωEIM, ωVeh), wherein the first control unit (30) comprises a first dynamic model, and the second control unit (31) comprises a second dynamic model, wherein the first control unit (30) is connected to an energy supply (36), while the second control unit (31) is connected to the drive unit (1).

2. Device according to Claim 1, **characterized in that** the first control unit (30) is embodied as a vehicle control unit and the second control unit (31) is embodied as a drive unit control unit.

3. Device according to Claim 1, **characterized in that** when a plurality of measured output variables (ω_{EIM}) and a plurality of model output variables (ω_{EIMObs}) are present, one of the measured output variables (ω_{EIM}) is compared with an assigned model output variable (ω_{EIMObs}).

4. Device according to one of the preceding claims, **characterized in that** an interference variable (M_{z}) of the drive train of the motor vehicle is estimated in the dynamic model.

5. Device according to Claim 4, **characterized in that** a value (ΔM_{Obs}) of the interference variable (M_{z}) of the drive train of the motor vehicle is estimated in the dynamic model by methods of interference variable observation.

6. Device according to Claim 4 or 5, **characterized in that** the value (ΔM_{Obs}) of the interference variable (M_{z}) of the drive train of the motor vehicle is compared with at least one threshold value in the dynamic model, wherein when a first threshold value is exceeded or a second threshold value is undershot by the value (ΔM_{Obs}) of the interference variable (M_{z}) at least one drive unit (1) of the motor vehicle is influenced or switched off.

7. Device according to Claim 6, **characterized in that** the threshold value depends on an operating state of the drive train.

8. Device according to Claim 5, **characterized in that** the estimated value (ΔM_{Obs}) of the interference variable (Mz) is fed back to the part of the dynamic model which at least partially models the drive train of the motor vehicle.

9. Device according to at least one of the preceding claims, **characterized in that** a torque and/or a power level of the drive unit (1) is used as an input variable and/or estimated as an interference variable (Mz), wherein the dynamic model uses and/or estimates a setpoint torque, a setpoint power level, a calculated actual torque and/or a calculated actual power level of the drive unit (1) .

10. Device according to at least one of the preceding claims, **characterized in that** the dynamic model models actuation dynamics of the at least one drive unit (1) and/or further units.

11. Device according to at least one of the preceding claims, **characterized in that** the dynamic model models torques and/or power levels of mechanically driven secondary assemblies.

12. Device according to at least one of the preceding claims, **characterized in that** the dynamic model at least partially models elasticities and/or mechanical play in the suspension systems of the drive unit (1) and/or in the suspension systems of further units and/or in a chassis and/or in the drive train.

13. Device according to at least one of the preceding claims, **characterized in that** the dynamic model or the parameters of the dynamic model are adapted on the basis of a time profile of at least one input variable (M_{Des}) and/or at least one measured output variable (ω_{EIM}) .

## Revendications

1. Dispositif de reconnaissance de réactions indésirables d'une chaîne de transmission d'un véhicule automobile comprenant au moins un groupe motopropulseur, avec lequel au moins une grandeur d'entrée (M_{Des}) du véhicule automobile et/ou du groupe motopropulseur (1) est introduite dans la chaîne de transmission et au moins une grandeur de sortie (ω_{EIM}) est mesurée au niveau du véhicule automobile et/ou du groupe motopropulseur (1), des moyens étant présents, lesquels acheminent l'au moins une grandeur d'entrée (M_{Des}) à un modèle dynamique qui simule au moins partiellement la chaîne de transmission du véhicule automobile, le modèle dynamique déterminant au moins une grandeur de sortie de modèle (ω_{EIMObs}) sur la base de l'au moins une grandeur d'entrée (M_{Des}), laquelle est comparée avec l'au moins une grandeur de sortie (ω_{EIM}) mesurée, une réaction indésirable de la chaîne de transmission étant déduite dans le cas d'une différence entre la grandeur de sortie (ω_{EIM}) mesurée et la grandeur de sortie de modèle (ω_{EIMObs}),
**caractérisé en ce que**
un premier contrôleur (30), comprenant le modèle dynamique, est relié à un deuxième contrôleur (31) par le biais d'un dispositif de communication (32) qui transmet au moins une grandeur d'entrée (M_{Des}) et/ou au moins une grandeur de sortie (ω_{EIM}, (ω_{Veh}) mesurée, le premier contrôleur (30) comprenant un premier modèle dynamique et le deuxième contrôleur (31) comprenant un deuxième modèle dynamique, le premier contrôleur (30) étant relié à une alimentation en énergie (36), alors que le deuxième contrôleur (31) est relié au groupe motopropulseur (1).

2. Dispositif selon la revendication 1, **caractérisé en ce que** le premier contrôleur (30) est réalisé sous la forme d'un contrôleur de véhicule et le deuxième contrôleur (31) sous la forme d'un contrôleur de groupe motopropulseur.

3. Dispositif selon la revendication 1, **caractérisé en ce qu'**en présence de plusieurs grandeurs de sortie (ω_{EIM}) mesurées et de plusieurs grandeurs de sortie de modèle (ω_{EIMObs}), l'une des grandeurs de sortie (ω_{EIM}) mesurées est comparée avec une grandeur de sortie de modèle (ω_{EIMObs}) associée.

4. Dispositif selon l'une des revendications précédentes, **caractérisé en ce qu'**une grandeur perturbatrice (M_{Z}) de la chaîne de transmission du véhicule automobile est estimée dans le modèle dynamique.

5. Dispositif selon la revendication 4, **caractérisé en ce qu'**une valeur (ΔM_{Obs}) de la grandeur perturbatrice (M_{Z}) de la chaîne de transmission du véhicule automobile est estimée dans le modèle dynamique par des méthodes d'observation des grandeurs perturbatrices.

6. Dispositif selon la revendication 4 ou 5, **caractérisé en ce que** la valeur (ΔM_{Obs}) de la grandeur perturbatrice (M_{Z}) de la chaîne de transmission du véhicule automobile est comparée dans le modèle dynamique avec au moins une valeur de seuil, au moins un groupe motopropulseur (1) du véhicule automobile étant influencé ou mis à l'arrêt en cas de dépassement d'une première valeur de seuil ou de passage en dessous d'une deuxième valeur de seuil par la valeur (ΔM_{Obs}) de la grandeur perturbatrice (M_{Z}).

7. Dispositif selon la revendication 6, **caractérisé en ce que** la valeur de seuil dépend d'un état de fonctionnement de la chaîne de transmission.

8. Dispositif selon la revendication 5, **caractérisé en ce que** la valeur (ΔM_{Obs}) estimée de la grandeur perturbatrice (M_{Z}) est renvoyée sur la partie du modèle dynamique qui simule au moins partiellement la chaîne de transmission du véhicule automobile.

9. Dispositif selon au moins l'une des revendications précédentes, **caractérisé en ce qu'**un couple et/ou une puissance du groupe motopropulseur (1) est utilisé comme grandeur d'entrée et/ou estimé en tant que grandeur perturbatrice (M_{Z}), le modèle dynamique utilisant et/ou estimant un couple de consigne, une puissance de consigne, un couple réel calculé et/ou une puissance réelle calculée du groupe motopropulseur (1).

10. Dispositif selon au moins l'une des revendications précédentes, **caractérisé en ce que** le modèle dynamique simule une dynamique de commande de l'au moins un groupe motopropulseur (1) et/ou d'autres groupes.

11. Dispositif selon au moins l'une des revendications précédentes, **caractérisé en ce que** le modèle dynamique simule des couples et/ou des puissances de groupes auxiliaires entraînés mécaniquement.

12. Dispositif selon au moins l'une des revendications précédentes, **caractérisé en ce que** le modèle dynamique simule au moins partiellement des élasticités et/ou un jeu mécanique dans les suspensions du groupe motopropulseur (1) et/ou dans les suspensions de groupes supplémentaires et/ou dans un châssis roulant et/ou dans la chaîne de transmission.

13. Dispositif selon au moins l'une des revendications précédentes, **caractérisé en ce que** le modèle dynamique ou les paramètres du modèle dynamique sont adaptés à l'aide d'une courbe dans le temps d'au moins une grandeur d'entrée (M_{Des}) et/ou d'au moins une grandeur de sortie (ω_{EIM}) mesurée.
